(19) Europäisches Patentamt
European Patent Office
Office européen des brevets

(11) **EP 1 939 619 B1**

(12) **EUROPEAN PATENT SPECIFICATION**

(45) Date of publication and mention of the grant of the patent:
**22.12.2010 Bulletin 2010/51**

(51) Int Cl.:
***G01N 31/12*** *(2006.01)*     ***C01B 21/20*** *(2006.01)*

(21) Application number: **08250005.9**

(22) Date of filing: **02.01.2008**

(54) **Apparatus and method for generating nitrogen oxides**

Vorrichtung und Verfahren zur Erzeugung von Stickstoffoxidemissionen

Appareil et procédé de génération d'oxydes de nitrogène

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **29.12.2006 GB 0626031**

(43) Date of publication of application:
**02.07.2008 Bulletin 2008/27**

(73) Proprietor: **Thermo Electron Manufacturing Ltd.**
**19 Mercers Row**
**Cambridge (GB)**

(72) Inventors:
 • **Alberti, David Marco Gertruda**
 **2642 CE  Pijnacker (NL)**

 • **Smeets, Louis Marie**
 **1056 NR  Amsterdam (NL)**

(74) Representative: **Parlett, Peter Michael**
 **Thermo Fisher Scientific**
 **1 St. George's Court**
 **Hanover Business Park**
 **Altrincham, Cheshire WA14 5TP (GB)**

(56) References cited:
| | |
|---|---|
| EP-A- 1 630 133 | GB-A- 116 503 |
| GB-A- 269 046 | US-A- 4 297 123 |
| US-A- 4 879 246 | US-A1- 2005 074 365 |

**EP 1 939 619 B1**

**Description**

The invention relates to an apparatus and method for generating nitrogen oxides in the combustion analysis of samples comprising a proportion of sulphur.

Combustion analysers are used to determine the concentration of one or more components of a sample, by combusting the sample and analysing the gaseous products for specific oxides. Typically, the carbon, sulphur and/or nitrogen content of the sample is measured by detecting $CO_2$, $SO_2$ and NO, respectively.

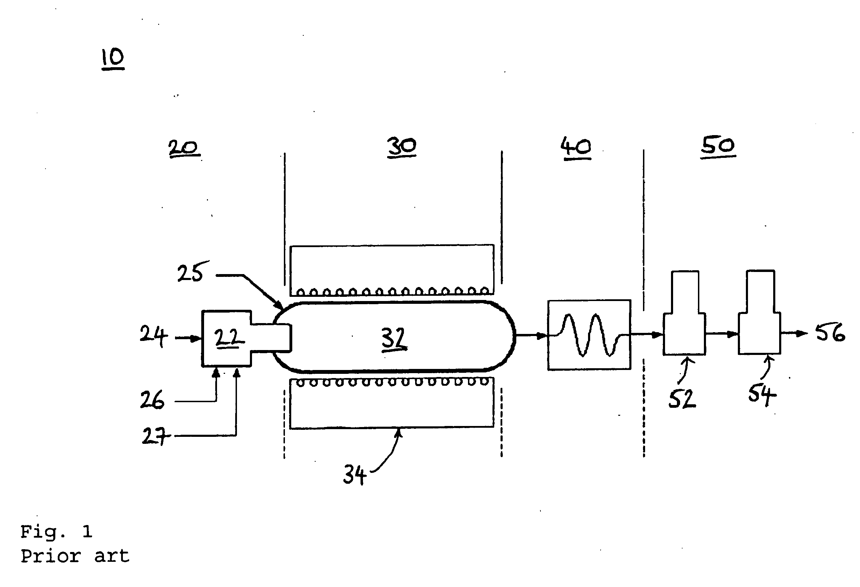

A schematic illustration of a typical combustion analyser is shown in figure 1. The combustion analyser 10 comprises a sample introduction stage 20, a combustion stage 30, a conditioning stage 40, and a detection stage 50. The sample introduction stage 20 comprises a sample introduction apparatus 22, to which are connected a supply of a sample 24, a supply of oxygen 26 and a supply of argon 27. The sample introduction apparatus 22 introduces these fluids into a combustion chamber 32 in a suitable form for combustion to take place. A further supply of oxygen 25 may be provided, directly into the combustion chamber 32. The combustion chamber 32 is heated by an electric heater 34, so that the sample is delivered into an oxygen-rich atmosphere at high temperature, typically of around 1000°C. The sample is thereby converted into various combustion products, such as $CO_2$, $H_2O$, $SO_2$, NO, etc. The combustion products leave the combustion chamber 32 and pass through the conditioning stage 40, where processes such as cooling, filtering, drying, etc. take place. The conditioned products then pass through one or more dedicated detectors 52, 54, in which properties of the components of the combustion products may be detected. For example, $CO_2$ may be detected by absorption of infrared radiation, using a non-dispersive infrared (NDIR) detector; $SO_2$ may be detected by fluorescence with ultraviolet light, using a light sensor; and NO can be detected from de-excitation processes following its reaction with ozone ($O_3$) to form excited $NO_2$, using a chemiluminescence light sensor. The detected signals are indicative of the respective amount of each component of the combustion products and can therefore be related to the composition of the original sample. Finally, the detected combustion products are passed out of the detection stage 50, as waste products 56.

The performance of such a combustion analyser 10 - in terms of its suitability, reliability, accuracy and robustness - depends strongly on its ability to convert the element(s) of interest in a sample into its/their respective oxide (s).

For combustion analysis of a sample containing sulphur, the combustion product to be detected is sulphur dioxide ($SO_2$). The achievable yield of $SO_2$ which may be detected with current combustion analysers is around 90%. The yield is the proportion of the amount of sulphur originally contained in the sample which is actually converted to sulphur dioxide. The achievable yield of a combustion analyser is calculated by analysing known, standard samples for calibration purposes. Once a calibration curve has been measured using standard samples, unknown samples may be analysed and the detected values may be calibrated accordingly. However, samples and also combustion conditions in a combustion analyser are subject to variation, with the result that the calibration curve cannot consistently provide accurate measurements from sample to sample.

Also, current compliance regulations for sulphur in petrochemical fuels mean that total sulphur specifications (i.e., the permissible amount of sulphur in any form) are at low parts per million (ppm) levels and are heading ever lower, towards sub-ppm levels. For example, diesel specifications for sulphur are soon expected to be 10 ppm in the EU and 15 ppm in the US; for gasoline (petrol), the specifications are expected to be 10 ppm in the EU and 80 ppm in the US. It is therefore increasingly important to be able to measure sulphur concentrations at such low levels.

Accordingly, it would be desirable to provide an improved apparatus and method for use in the combustion analysis of samples containing sulphur. A prior art combustion analyser is known from US 2005/0074365.

US 4,879,246 relates to a device for the mineralization of carbonaceous material by heating a solid sample to 300-400°C for 6-20 hours in a stream of oxygen and ozone/nitrogen oxides/chlorine. Ashes are formed as the resulting mineralization product and these are dissolved for chemical analysis.

GB 269,046 relates generally to an apparatus for ozonising air and converting it into nitric oxide.

According to the invention, there is provided a combustion analyser for combustion analysing a sample by combusting the sample and analysing the gaseous products, the analyser comprising: a combustion chamber for receiving a sample for combustion therein to form said gaseous combustion products; a fluid supply apparatus for supplying one or more fluids into the combustion chamber; and a detector for detecting $SO_2$ in said gaseous combustion products; characterised in that the fluid supply apparatus comprises a nitrogen oxides (NOx) generating apparatus and the fluid supply apparatus is arranged to supply $NO_x$ into the combustion chamber.

It has been found that nitrogen monoxide acts as a sulphur dioxide yield improver in the combustion analyser. When added to the combustion analyser, the nitrogen monoxide increases the yield of sulphur dioxide in the combustion products to be detected, relative to the yield of sulphur dioxide in the combustion products which would result when the substance is not added to the combustion analyser. As such, with samples of low sulphur concentration, a greater quantity of sulphur dioxide, for a given sample volume or mass, can be produced, offering improved detection. Furthermore, depending on the amount of nitrogen monoxide used for a particular sample, it is possible to provide a consistently greater yield of sulphur dioxide from the sample than previously achievable. Thus, the effect of variations between samples and variations in other combustion conditions can be reduced, if not minimised. This can help to ensure that measurements made using the calibration curve are accurate from sample to sample.

$NO_x$ refers generally to oxides of nitrogen, which typically include nitrogen monoxide (NO), nitrogen dioxide ($NO_2$), dinitrogen trioxide ($N_2O_3$) etc., in various proportions. In operation, at temperatures generally reached in a combustion chamber (around 1000°C), substantially all oxides of nitrogen are formed into nitrogen monoxide, so the $NO_x$ generated and supplied into the combustion analyser serves as a source of nitrogen monoxide yield improver.

Preferably, the $NO_x$ is supplied to the combustion analyser before and/or during combustion of the sample. This allows the NO to have effect while the combustion products are being formed, to help improve the yield from the outset of the combustion process. The mechanism by which the NO improves the yield of sulphur dioxide in the combustion gases may be such that the NO reduces sulphur trioxide to sulphur dioxide, or inhibits the formation of sulphur trioxide, or promotes the formation of sulphur dioxide, or a combination of these. Accordingly, it is preferred that the $NO_x$ be supplied before or during combustion of a sample, to allow the NO to have sufficient opportunity to have effect.

The $NO_x$ may be supplied to the combustion chamber of the combustion analyser via a dedicated inlet. Thus, the $NO_x$ gases may be pumped directly into the combustion chamber. Again, such supply may take place before and/or during combustion.

Typically, combustion chambers have one or more inlet ports for receiving a supply of oxygen and a carrier gas, such as argon, respectively. For simple application of the invention to existing combustion analysers, the $NO_x$ may be connected to the supply line for oxygen or a carrier gas, and carried into the combustion chamber therewith. The connection may be made anywhere along such supply line and is preferably in the form of a two-into-one connector (such as a 'T' piece).

Preferably, the connector or the apparatus connecting the $NO_x$ to a dedicated inlet, or to an oxygen supply line or a carrier gas supply line, is switchable between an on and an off state, so that during analysis of samples for which the NO yield improver is not required, the supply of the $NO_x$ may be stopped.

The provision of a $NO_x$ generator allows for a relatively simple technique for supplying a source of NO into the analyser. A $NO_x$ generator may most simply be provided by modifying an ozonator to receive a supply of nitrogen and oxygen, instead of pure oxygen. With the use of a $NO_x$ generator, it is not necessary to spike or dilute a liquid sample with a nitrogen-containing compound, which process is labour intensive. The $NO_x$ produced may most straightforwardly be supplied into one or other of the gas supply lines. This allows for retrofitting of the $NO_x$ generator to existing combustion analysers. It is also not necessary to provide a modified combustion chamber, in this case.

One particular advantage of the invention is that it is possible to use air (preferably first conditioned) as the supply of nitrogen and oxygen. Air intakes for ozonators typically condition the air by removing nitrogen, among other components. However, in embodiments of this invention, the nitrogen is not removed.

Preferably, the $NO_x$ generator is operated at a slightly elevated temperature, say between 10 and 30°C above room temperature. This has been found to improve the yield of $NO_x$ from the generator.

Samples for combustion analysis may be petrochemicals, high-grade chemicals, or food and beverage specimens, for which the concentration of sulphur in the sample may be subject to regulation, so that at least an estimated, or expected, proportion of sulphur may be known before combustion analysis. If the proportion of sulphur is entirely unknown, a first quantity of the sample may be analysed, to obtain an indication of the proportion of sulphur, so that an expected proportion of sulphur may be known for subsequent analyses. Preferably, the amount of $NO_x$ supplied to the combustion analyser is such that a proportion of NO yield improver in the combustion analyser is greater than the expected proportion of sulphur in a sample. Advantageously, the proportion of NO yield improver to the expected proportion of sulphur is greater than 2 to 1. Preferably still, the proportion is greater than 4 to 1. It has been found that, with tests using standard samples, adding a greater proportion of NO yield improver than the expected (in the case of a standard sample, the known) proportion of sulphur increases the yield of sulphur dioxide. Above a ratio of NO yield improver to sulphur of about 4 or 5 to 1, it has been found that the yield of sulphur dioxide does not increase so rapidly but starts to level off. By relative proportions, or ratios, of NO to $SO_2$ is meant molar proportions/ratios, and not proportions/ratios based on volume or mass.

It is considered that, for most samples, a proportion of NO yield improver to the expected proportion of sulphur of up to 1000 to 1 would be sufficient to ensure that an increased and substantially consistent yield of sulphur dioxide is achieved, even taking into account potentially significant variations in the actual proportion of sulphur in different samples. In most cases, a proportion of NO yield improver to the expected proportion of sulphur of up to 25-50 to 1 would be more than sufficient. Indeed, a ratio of 5 to 1 may be preferable, for example, where large variations in the sulphur content are not expected between samples.

Since nitrogen monoxide, or a source thereof, is added to the analyser, the combustion products at the detector may comprise nitrogen monoxide. The inventors have found that nitrogen monoxide interferes with the detection of sulphur dioxide, when using a UV fluorescence detector. It is therefore preferable to provide an ozone supply to the combustion products, prior to detection, where nitrogen monoxide would otherwise interfere. Ozone reacts with nitrogen monoxide to form nitrogen dioxide and oxygen, so may be used to remove the NO interference. The ozone is preferably added between the combusting step and the detecting step. The ozone may be added after the combustion chamber or to the detector, or to a location in between, such as the transfer tubing between the chamber and detector.

In this case, an ozone supply apparatus may be fitted to an existing combustion analyser relatively straightforwardly, by adding a connection into the combustion products line between the combustion chamber and the detector. Preferably, the connector is a two-into-one connector, such as a 'T' piece or the like.

Preferably, the ozone is supplied at a rate of between approximately 0.5 to 1 ml/s. Preferably also, the connector or the ozone supply apparatus is switchable between an on and an off state, so that ozone is not supplied when not required.

Preferably, the $NO_x$ generating apparatus and the ozone supply apparatus are provided together by: an electric discharge generator having a discharge region and arranged to provide an electric discharge through the discharge region; a first, $NO_x$ conduit disposed in a first part of the discharge region and comprising a $NO_x$ source gas inlet for receiving a supply of $NO_x$ source gas into the $NO_x$ conduit and a $NO_x$ gas outlet for supplying $NO_x$ gas therefrom; a second, ozone conduit disposed in a second part of the discharge region and comprising an ozone source gas inlet for receiving a supply of ozone source gas into the ozone conduit and an ozone gas outlet for supplying ozone gas therefrom.

In this way, both $NO_x$ and ozone can be produced using the same electric discharge device. This can provide a saving on components, as only one power supply and transformer is required to provide the electric discharges.

Preferably, a Venturi tube with an oxygen flow therethrough is used to draw the generated $NO_x$ from the $NO_x$ generator into an inlet hole provided in the constriction of the Venturi tube.

Preferably, the $NO_x$ generating apparatus comprises: an electric discharge generator having a discharge region and arranged to provide an electric discharge through the discharge region; a $NO_x$ conduit disposed in the discharge region and comprising a $NO_x$ source gas inlet for receiving a supply of $NO_x$ source gas into the $NO_x$ conduit and a $NO_x$ gas outlet for supplying $NO_x$ gas therefrom, wherein the $NO_x$ gas outlet comprises a Venturi tube having a tube constriction, an intake opening near the tube constriction, and a Venturi tube outlet downstream of the tube constriction, the Venturi tube being arranged to receive a fluid flow through the tube constriction such that $NO_x$ gas is drawn into the intake opening and supplied from the Venturi tube outlet.

According to the invention, there is also provided a method of combustion analysing a sample by combusting the sample in a combustion chamber of a combustion analyser and analysing the gaseous products, the method comprising the steps of: supplying the sample to the combustion chamber; combusting the sample to produce combustion products; and detecting $SO_2$ in the combustion products, characterised by the step of generating nitrogen oxides ($NO_x$) and supplying the generated NOx to the combustion 5 chamber.

Preferably the $NO_x$ and ozone are generated by providing a single electric discharge region; passing a mixture of nitrogen and oxygen through a first part of the region, to generate $NO_x$; and passing oxygen through a second part of the region, to generate ozone.

The invention, preferably uses an ozonator with a nitrogen and oxygen supply to generate NOx to be supplied to a combustion chamber of a combustion analyser for combustion analysing a sample by combusting the sample and analysing the gaseous products.

The invention may be put into practice in a number of ways and some embodiments will now be described, by way of non-limiting example only, with reference to the following figures, in which:

Figure 1 shows a schematic layout of a typical, prior art combustion analyser;
Figure 2 shows a schematic layout of a combustion analyser according to one embodiment of the invention;
Figure 3 shows a schematic layout of a combustion analyser according to another embodiment of the invention;
Figure 4 shows a graph, illustrating the effects of adding a nitrogen compound into the combustion analyser;
Figure 5 shows a flow diagram illustrating the steps for generating $NO_x$;
Figure 6 shows a schematic cross section of a $NO_x$ generator according to one embodiment of the invention;
Figure 7 shows a schematic cross section of a $NO_x$ and ozone generator according to another embodiment of the invention; and
Figure 8 shows a schematic cross section of a $NO_x$ and ozone generator according to a further embodiment of the invention.

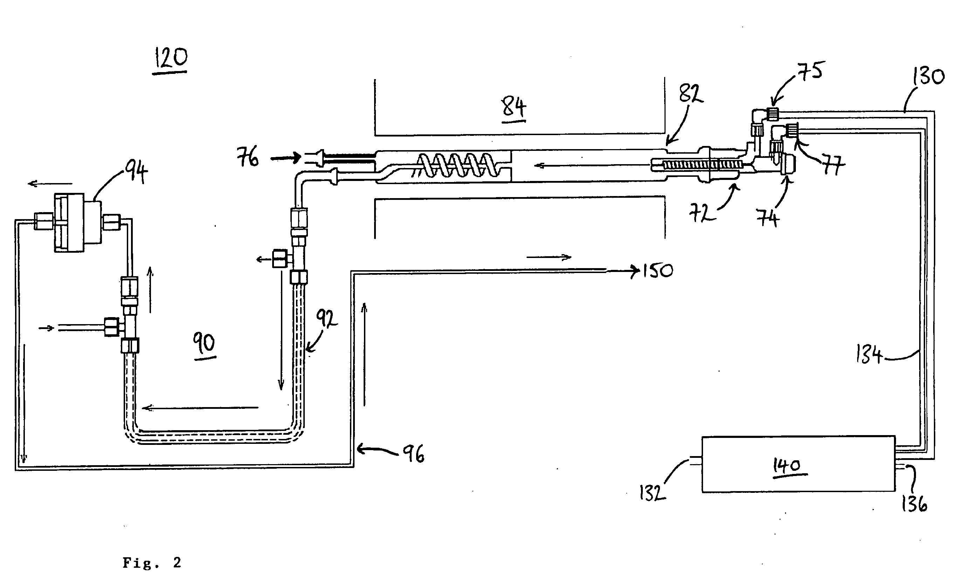

Referring to figure 2, there is shown a schematic layout of a combustion analyser 120, in accordance with one embodiment of the invention. The combustion analyser 120 has a sample introduction apparatus 72, which includes a sample supply inlet 74, an oxygen supply inlet 75, and a carrier gas supply inlet 77. The sample introduction apparatus 72 is connected to a combustion chamber 82, which is heated by a heater 84. The combustion chamber 82 is divided into two compartments, the second of which being a turbo compartment and having a further oxygen supply inlet 76, to promote complete combustion of a sample.

Combustion products formed in the combustion chamber 82 pass through a conditioning stage 90, before detection. In this example, the conditioning stage includes a dryer 92, which removes water from the combustion products, the water being entrained by a dry gas flow in the opposite direction to the combustion products, the dry gas flow flowing through an outer tube of the dryer. The conditioning stage also includes a filter 94.

The conditioned combustion products then pass through a combustion product line 96 to a detector 150.

The combustion analyser 120 has an oxygen supply line 130 connected to the oxygen supply inlet 75. The oxygen supply line has an end 132 for connection to an oxygen feed unit (not shown). The combustion analyser 120 has a carrier gas (typically argon) supply line 134 connected to the carrier gas supply inlet 77. The carrier gas supply line has an end 136 for connection to a carrier gas feed unit (not shown).

Installed on both the oxygen and the carrier gas supply lines 130, 134 is a $NO_x$ generator 140. The $NO_x$ generator 140 is configured to provide a supply of $NO_x$ into one, both or none of the oxygen and carrier gas supply lines 130, 134. The $NO_x$ generator 140 is connected to both supply lines 130, 134, by a switchable connector (not shown), which may be switched between various settings, depending on the application:

| Setting | Oxygen supply line | Carrier gas supply line |
|---------|--------------------|-----------------------------|
| A | Oxygen | Carrier gas |
| B | Oxygen & $NO_x$ | Carrier gas |
| C | Oxygen | Carrier gas & $NO_x$ |
| D | Oxygen & $NO_x$ | Carrier gas & $NO_x$ |

In other embodiments, there may be more than one connector, which may or may not be switchable, between the $NO_x$ generator 140 and the oxygen supply line 130 and the carrier gas supply line 134. In still others, a connector may be fitted only to one of the supply lines 130, 134. Whichever way, in this embodiment, the $NO_x$ generator 140 is installed on, and therefore modifies, supply line tubing which is already on the outside of a combustion analyser. In this way, the $NO_x$ generator 140 may be relatively straightforwardly retrofitted to existing combustion analysers which are used to detect sulphur concentrations.

The $NO_x$ generator 140, in this embodiment, is configured to supply nitrogen oxide gases into one or both of the supply lines 130, 134. For a setting in which the $NO_x$ generator 140 is connected or switched into only the oxygen supply line 130, a flow of oxygen passes into end 132 and, from the supply line 130, into the supply inlet 75 and on into the combustion chamber 82. A typical flow rate for the oxygen is between 200 and 400 ml/min. The $NO_x$ gas is pumped into the oxygen supply line 130 through the connector, where it mixes with the oxygen, for supply to the combustion chamber. A preferred flow rate for the $NO_x$ gas is between 15 and 50 ml/min. Such a flow rate is generally suitable to provide an abundance of NO in the combustion chamber before and/or during the combustion process, so that the yield of $SO_2$ in the combustion products may be improved.

The combustion products formed in the combustion chamber 82 - including an improved yield of $SO_2$ - are carried through the conditioning stage 90 and along the combustion products line 96, by a general, background flow of carrier gas or oxygen through the analyser 120. From the combustion products line 96, the combustion products are passed into one or more detectors 150 (not shown), one of which is configured to detect an amount of $SO_2$ therein.

The detector 150 for detecting $SO_2$ can be any suitable detector and is not limited to a UV fluorescence detector. For example, the detector 150 may be a coulometric detector using iodometric titration. In this case, the combustion gases containing $SO_2$ are passed through the electrolyte of a titration cell, containing tri-iodide ($I_3^-$). The sulphur dioxide reacts with the tri-iodide to form a sulphate and iodide. This reaction changes the potential from its preset value of the cell and this is detected. At the anode, iodide is reduced to iodine, to compensate for the tri-iodide deficiency, by an applied current. The current is integrated over time, providing a measurement of the amount titrated sulphur dioxide, from which the amount of sulphur in the sample may be calculated. The reaction equations for this process are:

$$6H_2O + SO_2 + I_3^- \rightarrow SO_4^{2-} + 3I^- + 4H_3O^+$$

$$2I^- \rightarrow I_2 + 2e^- \quad \} \quad \text{at the anode}$$

$$I_2 + I^- \rightarrow I_3^- \quad \} \quad \text{at the anode}$$

$$2H_3O + 2e^- \rightarrow H_2 + 2H_2O \quad \} \quad \text{at the cathode}$$

Since the invention improves the detectable sulphur yield by increasing the yield of $SO_2$ in the combustion gases, the invention may be applied to any combustion analyser employing a sulphur dioxide detection mechanism and provide corresponding advantages thereto.

Normally, when a sulphur-containing substance is combusted, approximately 90% of the sulphur is formed into sulphur dioxide and approximately 10% is formed into sulphur trioxide ($SO_3$). For this reason, most total sulphur detectors measure sulphur dioxide in one way or another. One common detector used is a UV fluorescence detector. Total sulphur ultraviolet (TSUV) detection is based on the principle that $SO_2$ molecules fluoresce; i.e., absorb UV light, become excited, then relax to a lower energy state, emitting UV light at a specific wavelength in the process. The emitted light is detected to provide a measure of the amount of $SO_2$ present.

However, the inventors have recognised that the readings taken by the above type of detector are not a result purely of $SO_2$ fluorescence. It has been found that the detector is unable to distinguish between $SO_2$ and NO, since they both fluoresce upon excitation with UV light in generally the same wavelength range. Accordingly, the inventors have appreciated that measurements made by such a detector may indicate higher levels of $SO_2$ than are actually present in the fluorescence chamber, since NO fluorescence can contribute to the detected signal. Many samples contain a proportion of nitrogen and so can be incorrectly quantified by the detector.

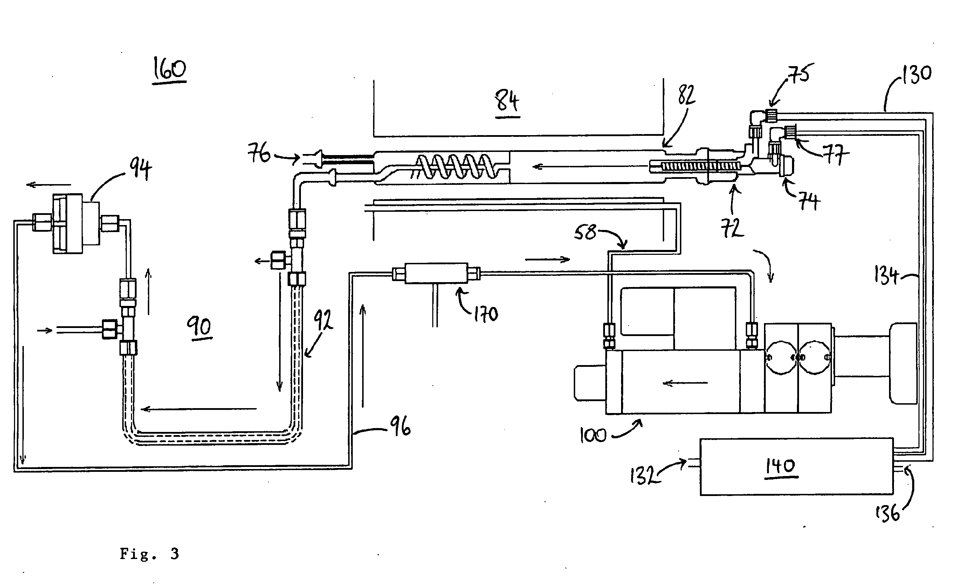

Accordingly, a method and apparatus for removing the interfering nitrogen monoxide from the combustion products is now discussed, in accordance with one embodiment of the invention and with reference to figure 3.

When it is desired to measure the concentration of nitrogen in a sample, it is known to use a total nitrogen (TN) detector, as mentioned above. This is a chemiluminescence detector, which measures the amount of light emitted when excited nitrogen dioxide falls to its ground state. The excited nitrogen dioxide is formed from the reaction of nitrogen monoxide with ozone ($O_3$). The reaction mechanism used in TN detectors has been applied in sulphur dioxide analysis.

Figure 3 shows schematically a combustion analyser 160, which is similar to that shown in figure 2, but with some modifications. At the end of the combustion products line 96, there is provided a UV fluorescence detector 100. An ozone generator 170 is installed on the combustion products line 96 between the combustion chamber 82 and the detector 100, so that any nitrogen monoxide in the combustion products may react with the ozone and thereby be removed from the combustion products and not be detected by the sulphur dioxide UV fluorescence detector 100. An ozonator (also known as an ozonizer) is preferably employed as the ozone generator 170.

The ozone generator 170 is configured to supply ozone to the combustion products line 96 at a rate sufficient to remove substantially all of the nitrogen monoxide. For example, an oxygen flow of 50 ml/min supplied to an ozonator has been found to be sufficient to remove the nitrogen monoxide formed from a nitrogen concentration in the combustion products of up to 9000 ppm.

The ozone mixed into the combustion products should preferably be supplied in a greater quantity than is needed to remove all NO gas, to help ensure substantially all NO gas is converted to $NO_2$. Since ozone is toxic, it should preferably not simply be pumped to waste. Accordingly, the combustion analyser 160 has a waste discharge line 58, which passes through or near to the combustion chamber heater 84. In this way, ozone present in the waste products from the detector 100 may be thermally dissociated into oxygen before being discharged from the analyser. Other techniques for ozone removal may alternatively be employed.

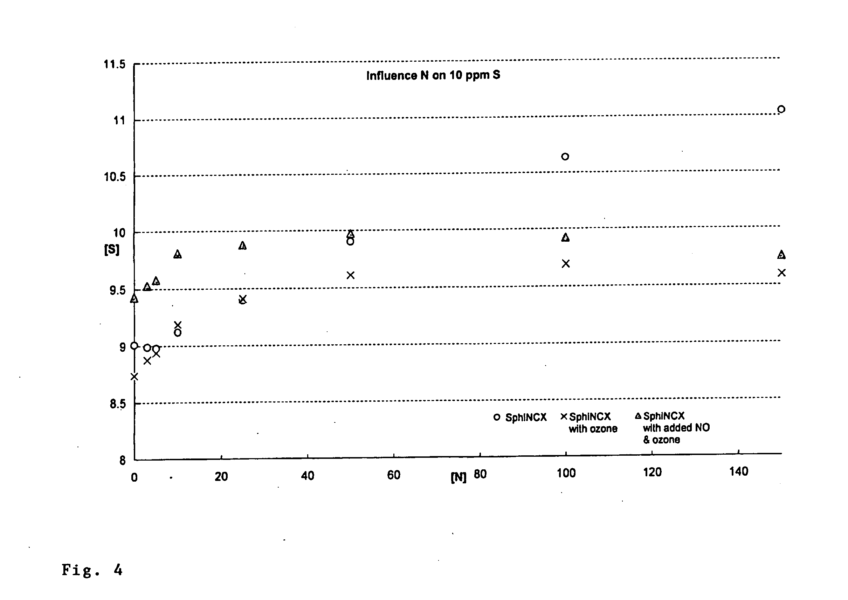

An experiment, using a combustion analyser corresponding to the combustion analyser 160, and its results will now be discussed. The experiment is discussed with reference to table 1, below, and figure 4. In the experiment, a set of known, standard samples was prepared, as follows. Eight different samples were prepared and each sample contained 10 ppm of a sulphur-containing substance. The samples also contained the following concentration of a nitrogen-containing substance, respectively: 0, 3, 5, 10, 25, 50, 100, and 150 ppm. The nitrogen-containing substance used was pyridine in xylene.

A combustion analyser to detect $SO_2$ by UV fluorescence detection was modified to allow it to operate under a number of different conditions. The analyser used was the SphiNCX analyser, manufactured by Thermo Fisher Scientific Inc.. The modifications made were to add a nitrogen oxides ($NO_x$) generator to the oxygen supply line, by means of a switchable connector, and to add an ozone generator to the combustion products line, again by means of a switchable connector. The switchable connectors were used so that one or both of the supplies could be turned off, as required.

The following methods of analysis were used with each of the eight samples, respectively. For method A, the analysis was conducted with both the $NO_x$ and $O_3$ supplies turned off; that is, essentially, the SphiNCX analyser was operating in its standard manner according to international standard ASTM D5453 for total sulphur determination. For method B, the analysis was conducted with the $O_3$ supply switched on and the $NO_x$ supply switched off. That is, the combustion process was as standard, but substantially all NO in the combustion products was removed. For method C, the analysis was conducted with both $NO_x$ and $O_3$ supplies turned on. That is, the analysis was as standard, but a yield improver gas was supplied to the combustion chamber, along with the oxygen supply, and substantially all NO in the combustion products was removed. When the ozone generator was employed, the ozone gas flow rate into the combustion products line was 50 ml/min. When the $NO_x$ generator was employed, the $NO_x$ flow rate into the oxygen supply line was between 34 and 40 ml/min. The sulphur-containing liquid used was thiophene.

The results of the tests are shown in table 1 and on the graph of figure 4. The results for method A generally show a rise in the detected concentration of total sulphur in the eight standard samples, with increasing nitrogen in the samples. With no added nitrogen-containing liquid in the sample (sample 1), the yield of $SO_2$ was around 90%. The apparent yield of $SO_2$ for sample 8 was around 110%, clearly confirming that the UV fluorescence detector was measuring a signal from an interfering substance (NO), in addition to the $SO_2$.

Table 1: Influence of added nitrogen with different methods of determining sulphur on 10 ppm sulphur.

| Added N/ppm | | 0 | 3 | 5 | 10 | 25 | 50 | 100 | 150 |
|---|---|---|---|---|---|---|---|---|---|
| Detected | A | 9.01 | 8.99 | 8.98 | 9.12 | 9.40 | 9.90 | 10.64 | 11.04 |
| S/ppm by | B | 8.74 | 8.88 | 8.94 | 9.19 | 9.41 | 9.61 | 9.69 | 9.59 |
| method: | C | 9.43 | 9.53 | 9.58 | 9.81 | 9.88 | 9.97 | 9.92 | 9.75 |

The results for method B do not show an ever-increasing detected concentration of total sulphur, with increasing nitrogen concentration in the samples. Provided sufficient ozone is mixed with the combustion products, substantially all NO can be removed from them. This means that the signal generated by the detector is substantially wholly from the fluorescence of $SO_2$ and indicates that the actual yield of $SO_2$ was around 87%. Accordingly, a calibration curve based on standard samples analysed using method B may be obtained and used to provide total sulphur measurements of unknown samples, without interference from NO in the detector.

However, the yield of $SO_2$ is not consistent across samples 1 to 8, but varies from around 87% to around 96%, as the nitrogen concentration in the samples varies. The yield does appear to level off at around 95-96% from nitrogen concentrations in the sample of about 40-50 ppm and, before that, there is a reasonable yield, of over 90%, for nitrogen concentrations above about 10 ppm.

Nevertheless, the yield of $SO_2$ is affected by variations in the concentration of nitrogen in the samples. Since, for actual samples, the concentration of nitrogen is unknown and may vary between samples, a calibration curve obtained under method B would be an improvement on one obtained under method A, but still could not assure consistent applicability.

The results for method C are similar to those for method B, in that the detected concentration of total sulphur does not continue increasing with increasing added nitrogen concentration in the sample, but also levels out. However, the yield is shifted upwards for all samples and the levelling off of the yield occurs at lower sample concentrations of nitrogen. Also, the variation in detected sulphur concentrations across samples 1 to 8 is much reduced, giving a higher, more consistent yield of $SO_2$. The increase in yield from method B to method C varies from around 2% to around 7%, perhaps averaging around a 4% increase. This confirms that the additional NO in the combustion chamber is acting to encourage the formation of $SO_2$. The levelling off of the detected sulphur concentration takes place, at around 98-99%, from added nitrogen concentrations in the sample from around 20-40 ppm. The yield is considered to be good for all of the samples tested using the supplied $NO_x$ gas, whether or not a nitrogen-containing liquid was also added to the sample. The yield range, from around 94% to around 99%, is more consistent than that, of around 87% to around 96%, for method B.

The fact that there is still some variation in the detected total sulphur concentration for the method C results may be due to a number of factors. General variations in the measurement conditions may have had an effect, as may variations in the conditions under which the eight samples were prepared. Also, this may be down to how readily the nitrogen monoxide was mixed with the sample during combustion. It may be that the nitrogen-containing liquid added to the sample itself enables the NO, once formed, to have its yield-improving effect on $SO_2$ formation from the early stages of combustion, since it is already mixed with the sample. However, the $NO_x$ gas, which is pumped in and forms NO in the combustion chamber, first needs to mix with the sample while combustion is taking place. This may explain why the yield of $SO_2$ is lower for lower concentrations of nitrogen-containing liquid in the sample, even though an additional supply of NO is provided to the combustion chamber as $NO_x$ gas, so that there is a relatively high overall concentration of NO in the chamber.

It is often generally known what the total sulphur concentration in a sample is, before measurement. For example, the sample may be taken from a high-grade chemical, or a food or beverage, or a petrochemical, each of which has a pre-defined, allowable total sulphur concentration. Even if the expected total sulphur concentration is in a working range between 0 and 100 ppm, the initial flow rate of NO gas can be set to correspond to a concentration of around 4-5 times the expected sulphur concentration and then reduced (or increased, if appropriate) for subsequent analyses, once a first measurement of the total sulphur concentration has been made.

For example, once a combustion analyser has been calibrated, any signal detected by a $SO_2$ UV fluorescence detector will look like fluorescence from $SO_2$, even if no sulphur-containing sample is being analysed. NO gives a signal on total sulphur detectors, but at a signal level of about 1/100th of that from sulphur dioxide (i.e., 100 ppm NO is 'seen' as about 1 ppm $SO_2$). Accordingly, if the working range of the analyser is configured to detect total sulphur levels between 0 and 100 ppm, an initial flow rate for the $NO_x$ gas into the analyser can be set so that the $SO_2$ detector measures a

signal which looks like 4 ppm or more $SO_2$ (i.e., about 400 ppm of NO, which is around 4-5 times the expected total sulphur concentration). However, of course, the detected signal is not from $SO_2$, but from the deliberate NO interference passing into the detector. In practice, a pre-determined signal on the $SO_2$ detector will be known to represent a sufficient flow rate of $NO_x$ into the analyser for any particular analysis regime. For example, the inventors have implemented the above embodiments by modifying a TS3000 combustion analyser, manufactured by Thermo Fisher Scientific Inc.. It has been found that an arbitrarily selected signal level of 300 mV on the $SO_2$ UV fluorescence detector indicates that there is a sufficient flow of $NO_x$ gas into the analyser, to improve the $SO_2$ yield. Even with minor variations in the generation efficiency - so that, for example, the signal level may fluctuate by +/- 20-40 mV, there is generally a sufficient quantity of NO in the combustion chamber to have the desired yield improving effect.

In some of the tests discussed above, an ozone feed unit was employed to remove any NO present in the combustion gases, before they were detected. Such a feed unit is not required when the detector 150, used to detect the $SO_2$ concentration, is not affected by NO interference. For example, it would not be required when a coulometric detector is used. Furthermore, it may be desirable not to mix ozone with the combustion products, even when a UV fluorescence detector is used. This may be so that evaluation or reference measurements may be made, or so that a total nitrogen chemiluminescence detector may be employed following the $SO_2$ detector.

Having said that, where a UV fluorescence detector 100 is used, it is preferable to add an ozone feed unit 170 onto the combustion products line 96, as shown in figure 3.

As described above, the yield improver may be provided by nitrogen monoxide gas or $NO_x$ gas. The gaseous yield improver may be pumped directly into the combustion chamber, via a dedicated inlet. Such inlet may be similar to that used for the additional oxygen supply 76, although the dedicated inlet for the yield improver may be located at any suitable position at either end of the combustion chamber 82. Alternatively, and more straightforwardly, the gaseous yield improver may be supplied into one of the oxygen or carrier gas supply lines 130, 134, as described above. The nitrogen monoxide is obtained from a $NO_x$ generator, configured to generate and then supply $NO_x$ into the combustion analyser via any of the above routes, among others.

A $NO_x$ generator may be provided based on the principles of an ozonator. An ozonator (also known as an ozonizer) is an apparatus for the preparation of ozone by passing oxygen through an electrical discharge. The electrical discharge provides energy to break $O_2$ molecules, which are then able to re-form as $O_3$ molecules. The electrical discharge used is variously known as a silent discharge, a corona discharge, and a brush discharge, and is essentially a low-current electric discharge across a gas-filled gap, with a relatively high voltage gradient.

It has been found that passing nitrogen and oxygen through such an electrical discharge can produce sufficient quantities of $NO_x$ to be used as a source of nitrogen monoxide for the combustion analyser. Advantageously, ambient air (preferably filtered and dried) can be used as the source of the nitrogen and oxygen into the ozonator.

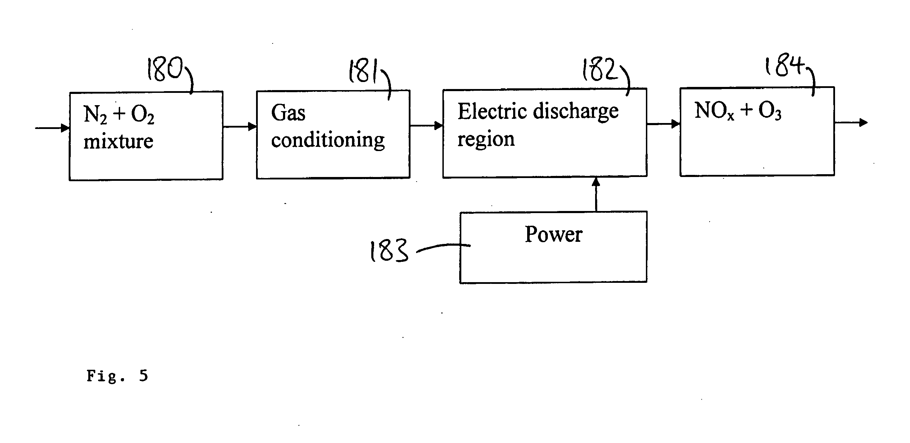

Figure 5 shows a flow diagram of the steps which may be taken to generate $NO_x$. In step 1 (180), a supply of nitrogen and oxygen is provided to the generator. In step 2 (181), depending on the source of the $NO_x$ source gases, they may need to be conditioned. For example, the gases may need to be dried, to remove any moisture, and filtered, to remove any particulate matter, such as dust. A suitable absorbent material for drying the $NO_x$ source gases is silica gel. A suitable filter is a PTFE particulate micro filter. Other types of conditioning may additionally or alternatively be used, as appropriate.

In step 3 (182,183), the (conditioned) gases enter an electric discharge region. The $NO_x$ generator includes a power and control unit, which applies an alternating voltage signal, through a transformer, to a first electrode. A second electrode, separated from the first electrode by a gap which provides the discharge region, may be connected to ground. Alternatively, a positive voltage peak my be applied to one electrode while a corresponding, negative voltage peak is applied to the other. In one embodiment, the power supply provides the transformer with approximately 55 Hz, 15 V pulses, which the transformer steps up to around 15 kV. Typically, however, the voltages applied to the electrodes are between 5 and 15 kV, with frequencies ranging from 50-60 Hz (mains supply), up to between 400 Hz and 1 kHz. The currently preferred supply values are a frequency of 200 Hz, with a half period in which +6 kV is applied to one electrode, then a half period in which -6 kV is applied to the other electrode. This results in a peak-to-peak voltage of 12 kV.

As the current discharges between the first electrode and the second electrode, some of the nitrogen and oxygen molecules are dissociated and ionised. Recombination of the excited species produces nitrogen oxides (NO, $NO_2$, $N_2O_3$ etc., or $NO_x$) and ozone ($O_3$), as shown in step 4 (184), as well as oxygen. The generated $NO_x$ is then supplied to the combustion analyser, where most of it will form NO at the temperature of the combustion chamber. Although such a $NO_x$ generator may not be highly consistent in its $NO_x$ generation efficiency, this is generally not a problem for the intended application, since the amount generated is considered to be sufficient to enable the desired sulphur dioxide yield improvement to be achieved.

As mentioned above, the $NO_x$ source gas may simply be air, which typically comprises around 80% of nitrogen and around 20% of oxygen. Alternatively, the gas may be a mixture of nitrogen and oxygen from gas bottles, preferably at a ratio of $N_2$ to $O_2$ of greater than 50:50. However, given the added cost and potential hazard of using gas bottles, and the simplicity of using air, the latter is preferred. The $NO_x$ source gas may be pumped into the $NO_x$ generator, or

may be drawn into it, using the pressure drop of the combustion analyser itself or of a dedicated suction device.

In applications where the NO yield improver is not required, the $NO_x$ generator may be switched off so that it becomes a passive part of the fluid supply apparatus of the combustion analyser. In that way, any nitrogen and oxygen passing through the (de-activated) electric discharge region will remain unaffected and enter the combustion chamber unchanged. At typical temperatures of the combustion chamber, nitrogen remains stable and does not affect measurements of the combustion products. The oxygen will simply provide an additional amount of combustion gas in the chamber. Alternatively, the outlet to the $NO_x$ generator may be closed off by a valve, so that no gas passes into the combustion chamber from the $NO_x$ generator.

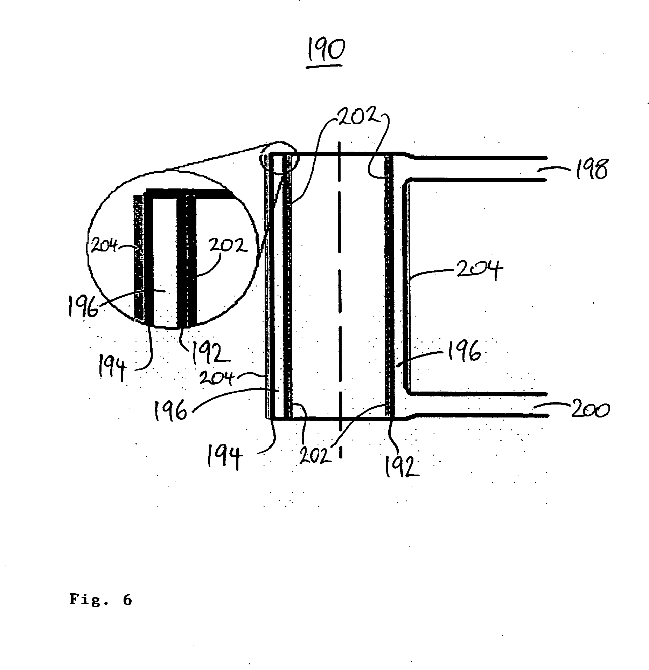

Figure 6 shows a $NO_x$ generator 190 according to one embodiment of the invention. The $NO_x$ generator 190 is provided by a double-tube arrangement. That is, a first tube 192 is surrounded by a coaxial, second tube 194, the second tube having a larger diameter than that of the first tube. As such, an annular channel 196 is formed between the two tubes 192,194. An inlet pipe 198 is provided for supplying $NO_x$ source gas (nitrogen and oxygen) into the channel 196. An outlet pipe 200 is provided for receiving generated $NO_x$ gas from the channel 196. The inlet and outlet pipes 198,200 are at extremities of the $NO_x$ generator, to provide a large volume of the channel 196 over which $NO_x$ generation may take place. However, it is not important which way round the inlet and outlet pipes are configured. The $NO_x$ source gas enters the annular channel 196 from the inlet pipe 198 at one end, fills the channel around its circumference and along its length, is subjected to electric discharges, and leaves the channel out of the outlet pipe 200, comprising a proportion of $NO_x$.

The tubes 192,194 and pipes 198,200 are preferably made from glass. The radial distance between an outer surface of the first tube 192 and an inner surface of the second tube 194 is between 0.5 and 5 mm, preferably between 1 and 2 mm. The currently preferred distance is 1.6 mm.

The double-tube arrangement is approximately 60 mm high and has a diameter of around 25 mm. The annular channel 196 between the tubes 192, 194 is enclosed at both ends, so that gas may enter and leave the annular channel only via the inlet and outlet pipes 198, 200.

The inside of the first tube 192 is hollow. Applied to the inner surface of the first tube 192 is a metallic film coating 202, preferably of silver. The coating 202 extends around the inner circumference and along the length of the tube 192 so as to provide a cylindrical, first electrode. Applied to the outer surface of the second tube 194 is a similar metallic film coating 204, providing a generally cylindrical, second electrode. In this way, the electrodes do not come into contact with the gases passing through the $NO_x$ generator. A portion of the $NO_x$ generator has been enlarged in a circle, for added clarity. A power and control unit (not shown) is connected to the first and second electrodes and is arranged to apply an appropriate voltage waveform thereto, in order to effect an electric discharge across the annular channel 196 between the electrodes.

The frequency of the applied waveform has a strong influence on the yield of generated $NO_x$. The currently preferred waveform has +/-6 kV peaks and a frequency of 200 Hz. It is also possible to change the yield of generated $NO_x$ by controlling the gas flow speed through the $NO_x$ generator 190. The preferred flow rate of $NO_x$ source gas into the $NO_x$ generator 190 is around 40 ml/min. Other operational parameters and conditions are similar to those described with reference to figure 5, so no further discussion is given here.

One implementation of the above embodiment has been made, using a standard ozonator normally employed for the generation of ozone. The ozonator was modified to receive a supply of nitrogen and oxygen, instead of purely oxygen. Other operational configurations and conditions are as for the $NO_x$ generator of figure 6. The ozonator used was taken from the model 42C trace level $NO$-$NO_2$-$NO_x$ analyser, manufactured by Thermo Fisher Scientific Inc..

With the above $NO_x$ generators, if it is desired to remove any NO present in the combustion gases, a further ozonator needs to be employed. In this case, the ozonator is configured as a standard ozonator; i.e. with a supply of (bottled) oxygen gas, at around 95% purity.

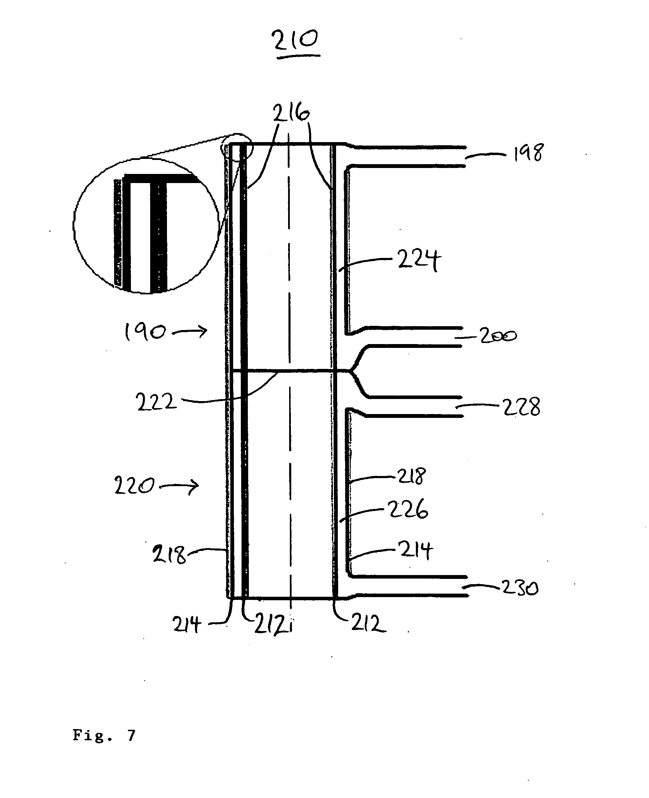

Figure 7 shows a $NO_x$ generator 210 in accordance with a further embodiment of the invention, in which the generator is not only configured to generate $NO_x$, but also to generate ozone. In this figure, similar or identical parts are labelled with the same reference numerals as those used in figure 6. In this combined generator 210, a $NO_x$ generator 190 is mounted axially adjacent an ozone generator 220. While in figure 7, the $NO_x$ generator 190 is shown as being disposed vertically above the ozone generator 220, it is not important which way round the generators are disposed.

The combined generator 210 has a first tube 212 surrounded by a coaxial, second tube 214, the first and second tubes being of similar dimensions to those stated above with reference to figure 6. However, the tubes 212, 214 are axially longer, at around 120 mm. A first electrode 216 extends around and along substantially the entire inner surface of the first tube 212. Similarly, a second electrode 218 extends around and along substantially the entire outer surface of the second tube 214.

However, an annular channel does not run along the entire length of the combined generator 210. A lateral partition 222, in the form of an annulus in this embodiment, is disposed midway along the combined generator 210, to separate the annular space between the two tubes 212, 214 into a first, $NO_x$ annular channel 224 and a second, ozone annular channel 226.

The $NO_x$ annular channel 224 has an inlet pipe 198 and an outlet pipe 200. The ozone annular channel 226 has an inlet pipe 228 for supplying oxygen into the channel. The channel 226 also has an outlet pipe 230 for receiving generated ozone gas from the channel. The $NO_x$ outlet pipe 200 is connected into a fluid supply apparatus for supplying the $NO_x$ to a combustion chamber of a combustion analyser. The ozone outlet pipe 230 is configured to supply the ozone into the combustion products line connecting the combustion chamber to a detector.

A single power and control unit (not shown) is connected to the first and second electrodes 216, 218 and is arranged to apply an appropriate voltage waveform thereto, in order to effect an electric discharge across the annular channels 224, 226.

Thus, a distinct $NO_x$ generator and a distinct ozone generator are provided with a single, shared, first electrode 216 and a single, shared, second electrode 218 and a single, shared power and control unit. With this combined generator 210, it is possible to generate both $NO_x$ and ozone. A saving is therefore made, since it not necessary to employ two independent power and control units, which each include a transformer and a printed circuit board (PCB). Instead, a single power and control unit is able to operate the combined generator 210.

It has been found that the combined generator 210 is able to function effectively - i.e. produce sufficient yields of $NO_x$ and ozone - even if the power and control unit is configured to operate in exactly the same manner as it is for a single ozonator. It may be that the efficiency of $NO_x$ and ozone production is not as high compared with a single $NO_x$ generator or a single ozone generator operated by such a power and control unit. However, it is considered to be more than adequate for the purposes of $NO_x$ generation to provide NO yield improver and ozone generation to remove unwanted downstream NO interferences. If it were desired to maintain the same efficiency of $NO_x$ generation and of ozone generation as compared with their entirely separate generation, the combined generator 210 would require more power.

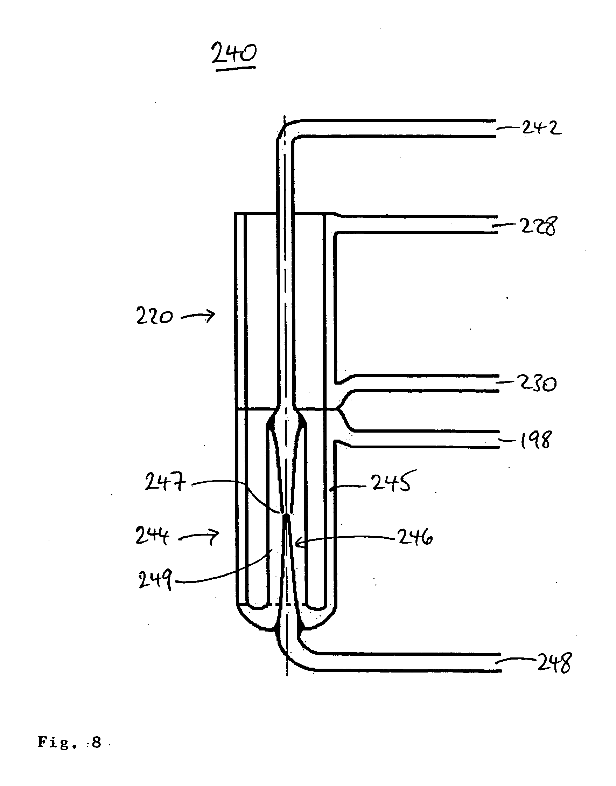

Figure 8 shows a combined generator 240 in accordance with a further embodiment of the invention. The combined generator 240 is similar to that of figure 7, apart from a modification which has been made to the $NO_x$ outlet pipe 242. In this embodiment, the $NO_x$ generator 244 has a Venturi tube 246 running through the hollow centre of the generator. The Venturi tube 246 has an opening 247 at its constriction. The Venturi tube 246 is connected to a supply of oxygen 248 at an upstream end and to the $NO_x$ outlet pipe 242 at a downstream end. The $NO_x$ outlet pipe 242 runs through the hollow centre of the ozone generator 220 and out of the combined generator 240. The $NO_x$ annular channel 245 is connected at one end to the $NO_x$ source gas inlet pipe 198. At the other end, the annular channel 245 leads into a chamber 249 which surrounds the Venturi tube 246. $NO_x$ gas generated by electric discharges across the annular channel 245 is drawn through the chamber 249 and into the Venturi tube 246 via the opening 247, as a result of the pressure drop at the constriction as the oxygen gas flows therethrough. Thus a mixture of $NO_x$ gas and oxygen leaves the Venturi tube 246 and is supplied from the $NO_x$ outlet pipe 242 into a combustion chamber. The Venturi tube is preferably configured to provide a pressure drop of 1.2 kPa (9 mmHg) and thereby to draw the $NO_x$ gas through the opening 247 at a rate of between 30 and 40 ml/min. This is advantageous in that it is not necessary to provide an additional pump for the $NO_x$ gas flow.

In a preferred arrangement of the above embodiment, the oxygen supply 248 is that which feeds into a combustion chamber as the standard combustion gas supply line. In that way, the oxygen supply line is simply opened up and diverted through the combined generator 240 on its way to the combustion analyser. This means that a separate inlet port for the $NO_x$ gas into the combustion chamber is not necessary, since the $NO_x$ is supplied into the chamber with the usual oxygen supply.

The $NO_x$ generator, or the combined ozone and $NO_x$ generator, may be operated at room temperature. However, it has been found that increasing the temperature of the generator by around 10°C above room temperature results in a corresponding increase in the yield of $NO_x$ from the generator. Similar benefits are expected from a working temperature for the generator of up to 40-50°C. This is probably down to an increase in the reaction speed for $NO_x$ generation and/or the removal of moisture from the system due to the higher temperatures. It has been found that moisture in the outlet of the $NO_x$ generator can effectively reduce the $NO_x$ levels almost down to base levels, probably by reacting with the $NO_x$ to form nitric acid.

Preferably, heat evolved from other parts of the combustion analyser is transferred to the generator in order to heat it. For example, the heat may be that from an ozone killer unit.

Various modifications of the above $NO_x$ generators and combined $NO_x$ and ozone generators are envisaged and provide further embodiments of the invention. For example, the Venturi tube arrangement is described above with reference to a combined generator, but may alternatively be used with a single $NO_x$ generator to similar effect.

It has been shown that NO, formed from $NO_x$ pumped into the combustion analyser, increases the yield of $SO_2$ in the combustion products. It has also been shown that, by mixing ozone with the combustion products prior to detection, it is possible to remove substantially all NO (whether from the sample or added $NO_x$ gas) from the combustion products. According to embodiments of the invention, then, it is possible to increase the $SO_2$ yield and to improve the accuracy of the $SO_2$ detection.

Since variations in the amount of nitrogen monoxide in the analyser affect the yield of $SO_2$, it is preferable to

## EP 1 939 619 B1

supply NO$_x$ to the analyser in sufficient quantities that any variations in the composition of the (unknown) samples have a negligible effect on the yield of SO$_2$, since the influence of the supplied NO on the yield will be much more significant.

As stated above, total sulphur combustion analysers cannot make absolute measurements because the sulphur in a sample is not completely converted into SO$_2$. A calibration curve is therefore necessary and it is important that the known, standard samples used to obtain the calibration curve are analysed under the same conditions as unknown samples, otherwise the results will not be accurate. By providing an excess concentration of NO in the analyser, preferably around 4-5 times the expected concentration of sulphur in the sample, not only a substantially consistent yield, but also an increased yield, of SO$_2$ may be achieved. This principle applies to all total sulphur combustion analysers.

As already described with some of the embodiments above, more than one technique for supplying the yield improver to the combustion analyser may be used together, if desired. For example, liquid yield improver (such as pyridine, benzonitrile and 2-ethylhexyl nitrate) may be added to the sample before detection and gaseous yield improver may be supplied to the combustion chamber before and/or during combustion.

As shown empirically in the above experiment, a sulphur dioxide yield improvement is achieved when the proportion of yield improver is greater than an expected proportion of sulphur in the combustion analyser. Figure 4 shows that a relative proportion of yield improver to expected sulphur of 2 to 1 or above provides a significant yield improvement. Between 4 and 5 to 1, the yield of sulphur dioxide does not increase so rapidly, but starts to level off. Nonetheless, for certain types of sample or entirely unknown samples, it may be preferable to supply yield improver to the combustion analyser with a ratio of yield improver to expected sulphur proportions of up to 25-50 to 1, or even 100 to 1. For example, with a low-range detector, detecting around 0 to 100 ppm sulphur, an abundance of yield improver may be considered to be present in the combustion analyser, when there is around 1000 ppm of the yield improver.

Preferably, the yield improver is supplied before or during combustion. It is most logical to supply the yield improver into the combustion chamber 82, either directly or indirectly.

Where ozone is added to the combustion analyser, the preferred flow rate for the oxygen into the ozone generator is set by a flow controller to be 50 ml/min. However, the ozone flow rate may be between approximately 0.5 and 1 ml/s, or any other suitable flow rate for removing interfering nitrogen monoxide from the combustion products.

The invention may be applied to all combustion analysis instruments, which detect total sulphur by measuring sulphur dioxide levels. This applies to dedicated total sulphur instruments, which are configured only to measure total sulphur. This also applies to multi-use instruments, which are configured to detect total sulphur as well as other components of a sample. For example, total sulphur and total nitrogen instruments are known and this invention may be applied to them.

A TS + TN instrument may be configured firstly to combust a first sample, secondly to measure the total sulphur in that first sample, and thirdly to measure the total nitrogen in that first sample. Alternatively, the instrument may be configured to combust a first sample and detect the total sulphur in that first sample, then to combust a second sample and to detect the total nitrogen in that second sample, where the first and second samples are of identical composition.

Where the same combustion sample is detected by both detectors, the total sulphur must be measured before the total nitrogen. This is because sulphur dioxide is adsorbed by the material, stainless steel, used in the detector tubing and chamber for a total nitrogen detector. Accordingly, if the total nitrogen were measured first, the subsequent total sulphur measurement would be compromised. As such, where total sulphur is measured, with added nitrogen monoxide to improve the yield and added ozone to remove the nitrogen monoxide, a total nitrogen measurement is not then possible, since substantially all of the nitrogen monoxide in the combustion products is removed by the ozone. The combustion analyser is therefore preferably switchable, so that the addition of a yield improver and/or supply of ozone may be turned on and off, as desired. A first sample can be analysed with the option on, so improving the detection of sulphur dioxide; and a second, identical sample can be analysed with the option turned off, so that total nitrogen may be measured. For the second sample, the total sulphur could also be measured at the same time, but this measurement would suffer from the possible problems of inconsistent sulphur dioxide yield and nitrogen monoxide interference.

In view of the fact that total sulphur detection must take place before total nitrogen detection in a combined combustion analyser, the introduction of an ozone feed unit to the combustion products line leading to the SO$_2$ detector and the addition of ozone to the combustion products before detection by the SO$_2$ detector are considered to be new and advantageous aspects of the invention.

The invention may be employed for various applications in, for example, the chemical, refinery, hydrocarbon, petrochemical, and food and beverage sectors. The invention may be used in the analysis of solid, high-viscosity, liquid or gaseous samples. In particular, the invention may be used in the analysis of refinery products, such as gasoline and diesels.

## Claims

**1.** A combustion analyser (120, 160) for combustion analysing a sample by combusting the sample and analysing the gaseous products, the analyser comprising:

a combustion chamber (82) for receiving a sample for combustion therein to form said gaseous combustion products;
a fluid supply apparatus (72) for supplying one or more fluids into the combustion chamber; and
a detector (150) for detecting $SO_2$ in said gaseous combustion products;
**characterised in that** the fluid supply apparatus comprises a nitrogen oxides ($NO_x$) generating apparatus (140) and the fluid supply apparatus is arranged to supply $NO_x$ into the combustion chamber.

2. The analyser (120, 160) of claim 1, wherein the $NO_x$ generating apparatus (140) comprises an electric discharge generator having a discharge region, the electric discharge generator being arranged to receive a supply of nitrogen and a supply of oxygen in the discharge region and to provide an electric discharge through the discharge region such that NOx is generated.

3. The analyser (120, 160) of claim 2, wherein the supply of nitrogen and the supply of oxygen are provided by air.

4. The analyser (120, 160) of any of the preceding claims, wherein the $NO_x$ generating apparatus (140) is switchable between a first on state in which $NO_x$ may be generated and supplied to the combustion chamber (82) and a first off state in which $NO_x$ may not be generated.

5. The analyser (120, 160) of any of the preceding claims, the fluid supply apparatus (72) further comprising a $NO_x$ supply line for receiving generated $NO_x$ from the $NO_x$ generating apparatus (140), wherein the $NO_x$ supply line has a connection into the combustion chamber.

6. The analyser (120, 160) of any of claims 1 to 4, the fluid supply apparatus (72) further comprising a $NO_x$ supply line for receiving generated $NO_x$ (200) from the $NO_x$ generating apparatus (140) and an oxygen supply line (130) and/or a carrier gas supply line (134) which feeds into the combustion chamber (82), wherein the $NO_x$ supply line has a respective connection into one or both of the oxygen supply line and the carrier gas supply line.

7. The analyser (120, 160) of any of the preceding claims, further comprising:

a combustion products line (96) connected to the combustion chamber (82) for transferring combustion products therefrom to a downstream detector (150); and
an ozone supply apparatus (170) having a connection into the combustion products line for supplying ozone thereto.

8. The analyser (120, 160) of any of the preceding claims, wherein the $NO_x$ generating apparatus (140) comprises a heating apparatus arranged to raise a working temperature of the $NO_x$ generating apparatus.

9. The analyser (120, 160) of claim 8, wherein the heating apparatus is arranged, in use, to transfer heat from an ozone killer unit to the $NO_x$ generating apparatus (140).

10. The analyser (120, 160) of any of the preceding claims, wherein the $NO_x$ generating apparatus (140) is provided by an ozonator (190, 210, 240) arranged to receive a supply of nitrogen and a supply of oxygen to generate $NO_x$ therefrom.

11. The analyser (120, 160) of claim 7, wherein the $NO_x$ generating apparatus (140) and the ozone supply apparatus are provided together by:

an electric discharge generator having a discharge region and arranged to provide an electric discharge through the discharge region;
a first, $NO_x$ conduit (224) disposed in a first part of the discharge region and comprising a $NO_x$ source gas inlet (198) for receiving a supply of $NO_x$ source gas into the $NO_x$ conduit and a $NO_x$ gas outlet (200) for supplying $NO_x$ gas therefrom;
a second, ozone conduit (226) disposed in a second part of the discharge region and comprising an ozone source gas inlet (228) for receiving a supply of ozone source gas into the ozone conduit and an ozone gas outlet (230) for supplying ozone gas therefrom.

**12.** The analyser (120, 160) of claim 11, wherein the first conduit (224) is disposed adjacent to the second conduit (226) and separated therefrom by a partition (222).

**13.** The analyser (120, 160) of claim 11 or 12, wherein the electric discharge generator comprises a single power and control unit.

**14.** The analyser (120, 160) of any of claims 11 to 13, wherein the $NO_x$ gas outlet comprises a Venturi tube (246) having a tube constriction, an intake opening (247) near the tube constriction, and a Venturi tube outlet (242) downstream of the tube constriction, the Venturi tube being arranged to receive a fluid flow through the tube constriction such that $NO_x$ gas is drawn into the intake opening and supplied from the Venturi tube outlet.

**15.** The analyser (120, 160) of any preceding claim, wherein the $NO_x$ generating apparatus (140) comprises:

an electric discharge generator having a discharge region and arranged to provide an electric discharge through the discharge region;
a $NO_x$ conduit (245) disposed in the discharge region and comprising a $NO_x$ source gas inlet (198) for receiving a supply of $NO_x$ source gas into the $NO_x$ conduit and a $NO_x$ gas outlet (200) for supplying $NO_x$ gas therefrom, wherein the $NO_x$ gas outlet comprises Venturi tube (246) having a tube constriction, an intake opening (247) near the tube constriction, and a Venturi tube outlet (242) downstream of the tube constriction, the Venturi tube being arranged to receive a fluid flow through the tube constriction such that $NO_x$ gas is drawn into the intake opening and supplied from the Venturi tube outlet.

**16.** The apparatus (120, 160) of claim 15 or 14, wherein the fluid is oxygen and the Venturi tube outlet (242) is configured to supply a mixture of oxygen and $NO_x$ therefrom.

**17.** A method of combustion analysing a sample by combusting the sample in a combustion chamber (82) of a combustion analyser (120, 160) and analysing the gaseous products, the method comprising the steps of:

supplying the sample to the combustion chamber;
combusting the sample to produce combustion products;
and
detecting $SO_2$ in the combustion products, **characterised by** the step of generating nitrogen oxides (NOx) and supplying the generated $NO_x$ to the combustion chamber.

**18.** The method of claim 17, wherein the NOx is supplied to the combustion chamber (82) before and/or during combustion.

**19.** The method of claim 17 or 18, wherein the NOx is generated by passing an electric discharge through a mixture of nitrogen and oxygen.

**20.** The method of claim 19, wherein the mixture is air.

**21.** The method of any of claims 17 to 20, further comprising the step of supplying ozone to the combustion products to convert at least a proportion of any nitrogen monoxide in the combustion products to nitrogen dioxide.

**22.** The method of any of claims 17 to 21, wherein the NOx is generated by an ozonator receiving a supply of nitrogen and a supply of oxygen.

**23.** The method of any of claims 17 to 22, wherein the NOx is generated at a temperature of between 30 and 50°C.

**24.** The method of claim 21, wherein the NOx and ozone are generated by:

providing a single electric discharge region;
passing a mixture of nitrogen and oxygen through a first part (224, 245) of the region, to generate $NO_x$; and
passing oxygen through a second part (226) of the region, to generate ozone.

**Patentansprüche**

1.  Verbrennungsanalysator (120, 160) zum Analysieren der Verbrennung einer Probe durch Verbrennen der Probe und Analysieren der gasförmigen Produkte, wobei der Analysator aufweist:

    eine Brennkammer (82) zum Aufnehmen einer Probe zur Verbrennung darin, um die gasförmigen Verbrennungsprodukte zu bilden;
    eine Fluidzuführvorrichtung (72) zum Zuführen eines oder mehrerer Fluide in die Brennkammer; und
    einen Detektor (150) zum Detektieren von $SO_2$ in den gasförmigen Verbrennungsprodukten;
    **dadurch gekennzeichnet, dass** die Fluidzuführvorrichtung eine Stickoxid- (NOx-) Erzeugungsvorrichtung (140) aufweist und die Fluidzuführvorrichtung dafür eingerichtet ist, NOx in die Brennkammer zuzuführen.

2.  Analysator (120, 160) nach Anspruch 1, wobei die NOx-Erzeugungsvorrichtung (140) einen Generator elektrischer Entladungen mit einem Entladungsbereich aufweist, wobei der Generator elektrischer Entladungen dafür eingerichtet ist, eine Zufuhr von Stickstoff und eine Zufuhr von Sauerstoff in dem Entladungsbereich zu empfangen und eine elektrische Entladung durch den Entladungsbereich zu bewirken, so dass NOx erzeugt wird.

3.  Analysator (120, 160) nach Anspruch 2, wobei die Zufuhr von Stickstoff und die Zufuhr von Sauerstoff durch Luft erfolgen.

4.  Analysator (120, 160) nach einem der vorhergehenden Ansprüche, wobei die NOx-Erzeugungsvorrichtung (140) zwischen einem ersten Ein-Zustand, in welchem NOx erzeugt und der Brennkammer (82) zugeführt werden kann, und einem ersten AusZustand, in welchem NOx nicht erzeugt werden kann, umschaltbar ist.

5.  Analysator (120, 160) nach einem der vorhergehenden Ansprüche, wobei die Fluidzuführvorrichtung (72) ferner eine NOx-Zuführleitung zum Aufnehmen von erzeugtem NOx von der NOx-Erzeugungsvorrichtung (140) aufweist, wobei die NOx-Zuführleitung eine Verbindung in die Brennkammer aufweist.

6.  Analysator (120, 160) nach einem der Ansprüche 1 bis 4, wobei die Fluidzuführvorrichtung (72) ferner eine NOx-Zuführleitung zum Aufnehmen von erzeugtem NOx (200) von der NOx-Erzeugungsvorrichtung (140) und eine Sauerstoffzuführleitung (130) und/oder eine Trägergas-Zuführleitung (134), welche in die Brennkammer (82) mündet, aufweist, wobei die NOx-Zuführleitung eine jeweilige Verbindung in die Sauerstoffzuführleitung oder die Trägergas-Zuführleitung oder in beide aufweist.

7.  Analysator (120, 160) nach einem der vorhergehenden Ansprüche, ferner umfassend:

    eine Verbrennungsprodukteleitung (96), die mit der Brennkammer (82) verbunden ist, zum Transportieren von Verbrennungsprodukten aus dieser zu einem stromabwärtigen Detektor (150); und
    eine Ozonzuführvorrichtung (170) mit einer Verbindung in die Verbrennungsprodukteleitung zum Zuführen von Ozon in diese.

8.  Analysator (120, 160) nach einem der vorhergehenden Ansprüche, wobei die NOx-Erzeugungsvorrichtung (140) eine Heizvorrichtung aufweist, die dafür eingerichtet ist, eine Arbeitstemperatur der NOx-Erzeugungsvorrichtung zu erhöhen.

9.  Analysator (120, 160) nach Anspruch 8, wobei die Heizvorrichtung dafür eingerichtet ist, im Betrieb Wärme von einer Ozonkiller-Einheit zu der NOx-Erzeugungsvorrichtung (140) zu übertragen.

10. Analysator (120, 160) nach einem der vorhergehenden Ansprüche, wobei die NOx-Erzeugungsvorrichtung (140) bereitgestellt wird durch einen Ozonisator (190, 210, 240), der dafür eingerichtet ist, eine Zufuhr von Stickstoff und eine Zufuhr von Sauerstoff zu empfangen, um daraus NOx zu erzeugen.

11. Analysator (120, 160) nach Anspruch 7, wobei die NOx-Erzeugungsvorrichtung (140) und die Ozonzuführvorrichtung zusammen bereitgestellt werden durch:

    einen Generator elektrischer Entladungen, der einen Entladungsbereich aufweist und dafür eingerichtet ist, eine elektrische Entladung durch den Entladungsbereich zu bewirken;
    eine erste Leitung, nämlich eine NOx-Leitung (224), die in einem ersten Teil des Entladungsbereiches ange-

**EP 1 939 619 B1**

ordnet ist und einen NOx-Quellen-Gaseinlass (198) zum Aufnehmen einer Zufuhr von NOx-Quellen-Gas in die NOx-Leitung und einen NOx-Gasauslass (200) zum Zuführen von NOx-Gas aus dieser aufweist;
eine zweite Leitung, nämlich eine Ozonleitung (226), die in einem zweiten Teil des Entladungsbereiches angeordnet ist und einen Ozonquellen-Gaseinlass (228) zum Aufnehmen einer Zufuhr von Ozonquellen-Gas in die Ozonleitung und einen Ozongasauslass (230) zum Zuführen von Ozongas aus dieser aufweist.

12. Analysator (120, 160) nach Anspruch 11, wobei die erste Leitung (224) der zweiten Leitung (226) benachbart angeordnet und durch eine Trennwand (222) von dieser getrennt ist.

13. Analysator (120, 160) nach Anspruch 11 oder 12, wobei der Generator elektrischer Entladungen eine einzige Leistungs- und Steuereinheit aufweist.

14. Analysator (120, 160) nach einem der Ansprüche 11 bis 13, wobei der NOx-Gasauslass ein Venturirohr (246) mit einer Rohrverengung, einer Ansaugöffnung (247) in der Nähe der Rohrverengung und einem Venturirohr-Auslass (242) stromabwärts der Rohrverengung aufweist, wobei das Venturirohr dafür eingerichtet ist, einen Fluidstrom durch die Rohrverengung hindurch aufzunehmen, derart, dass NOx-Gas in die Ansaugöffnung gesaugt und aus dem Venturirohr-Auslass zugeführt wird.

15. Analysator (120, 160) nach einem der vorhergehenden Ansprüche, wobei die NOx-Erzeugungsvorrichtung (140) aufweist:

einen Generator elektrischer Entladungen, der einen Entladungsbereich aufweist und dafür eingerichtet ist, eine elektrische Entladung durch den Entladungsbereich zu bewirken;
eine NOx-Leitung (245), die in dem Entladungsbereich angeordnet ist und einen NOx-Quellen-Gaseinlass (198) zum Aufnehmen einer Zufuhr von NOx-Quellen-Gas in die NOx-Leitung und einen NOx-Gasauslass (200) zum Zuführen von NOx-Gas aus dieser aufweist;
wobei der NOx-Gasauslass ein Venturirohr (246) mit einer Rohrverengung, einer Ansaugöffnung (247) in der Nähe der Rohrverengung und einem Venturirohr-Auslass (242) stromabwärts der Rohrverengung aufweist, wobei das Venturirohr dafür eingerichtet ist, einen Fluidstrom durch die Rohrverengung hindurch aufzunehmen, derart, dass NOx-Gas in die Ansaugöffnung gesaugt und aus dem Venturirohr-Auslass zugeführt wird.

16. Analysator (120, 160) nach Anspruch 15 oder 14, wobei das Fluid Sauerstoff ist und der Venturirohr-Auslass (242) dafür konfiguriert ist, aus ihm eine Mischung von Sauerstoff und NOx zuzuführen.

17. Verfahren zur Durchführung einer Verbrennungsanalyse einer Probe durch Verbrennen der Probe in einer Brennkammer (82) eines Verbrennungsanalysators (120, 160) und Analysieren der gasförmigen Produkte, wobei das Verfahren die folgenden Schritte aufweist:

Zuführen der Probe in die Brennkammer;
Verbrennen der Probe, um Verbrennungsprodukte herzustellen; und
Detektieren von $SO_2$ in den Verbrennungsprodukten, **gekennzeichnet durch** den Schritt des Erzeugens von Stickoxiden (NOx) und Zuführens der erzeugten NOx in die Brennkammer.

18. Verfahren nach Anspruch 17, wobei das NOx der Brennkammer (82) vor und/oder während der Verbrennung zugeführt wird.

19. Verfahren nach Anspruch 17 oder 18, wobei das NOx erzeugt wird, indem man eine elektrische Entladung in einer Mischung von Stickstoff und Sauerstoff stattfinden lässt.

20. Verfahren nach Anspruch 19, wobei die Mischung Luft ist.

21. Verfahren nach einem der Ansprüche 17 bis 20, ferner den Schritt des Zuführens von Ozon zu den Verbrennungsprodukten umfassend, um wenigstens einen Teil von eventuell vorhandenem Stickstoffmonoxid in den Verbrennungsprodukten in Stickstoffdioxid umzuwandeln.

22. Verfahren nach einem der Ansprüche 17 bis 21, wobei das NOx von einem Ozonisator erzeugt wird, der eine Zufuhr von Stickstoff und eine Zufuhr von Sauerstoff empfängt.

**23.** Verfahren nach einem der Ansprüche 17 bis 22, wobei das NOx bei einer Temperatur zwischen 30 und 50°C erzeugt wird.

**24.** Verfahren nach Anspruch 21, wobei das NOx und das Ozon erzeugt werden durch:

Bereitstellen eines einzigen Bereiches elektrischer Entladung;
Hindurchleiten einer Mischung von Stickstoff und Sauerstoff durch einen ersten Teil (224, 245) des Bereiches, um NOx zu erzeugen; und
Hindurchleiten von Sauerstoff durch einen zweiten Teil (226) des Bereiches, um Ozon zu erzeugen.

**Revendications**

**1.** Analyseur de combustion (120, 160) qui analyse la combustion d'un échantillon en effectuant une combustion de l'échantillon et en analysant les produits gazeux, l'analyseur comprenant :

- une chambre de combustion (82) qui reçoit un échantillon qui y subit une combustion pour former des produits gazeux de combustion;
- un appareil (72) d'apport de fluide qui apporte au moins un fluide dans la chambre de combustion et
- un détecteur (150) qui détecte le $SO_2$ dans lesdits produits gazeux de combustion,
**caractérisé en ce que**
l'appareil d'apport de fluide comprend un appareil (140) qui forme des oxydes d'azote ($NO_x$) et
**en ce que** l'appareil d'apport de fluide est agencé de manière à amener des $NO_x$ dans la chambre de combustion.

**2.** Analyseur (120, 160) selon la revendication 1, dans lequel l'appareil (140) qui forme des $NO_x$ comprend un générateur de décharges électriques qui présente une zone de décharge, le générateur de décharges électriques étant agencé de manière à recevoir un apport d'azote et un apport d'oxygène dans la zone de décharge et de manière à produire une décharge électrique dans la zone de décharge afin que des $NO_x$ soient formés.

**3.** Analyseur (120, 160) selon la revendication 2, dans lequel c'est l'air qui apporte l'azote et l'oxygène.

**4.** Analyseur (120, 160) selon l'une quelconque des revendications précédentes, dans lequel l'appareil (140) qui forme des $NO_x$ peut être commuté entre un premier état actif dans lequel les $NO_x$ peuvent être formés et amenés vers la chambre de combustion (82) et un premier état inactif dans lequel les $NO_x$ ne peuvent pas être formés.

**5.** Analyseur (120, 160) selon l'une quelconque des revendications précédentes, dans lequel l'appareil (72) d'apport de fluide comprend de plus une canalisation d'apport de $NO_x$ qui reçoit les $NO_x$ formés par l'appareil (140) de formation de $NO_x$, la canalisation d'apport de $NO_x$ présentant une liaison avec la chambre de combustion.

**6.** Analyseur (120, 160) selon l'une quelconque des revendications 1 à 4, dans lequel l'appareil (72) d'apport de fluide comprend de plus une canalisation d'apport de $NO_x$ qui reçoit les $NO_x$ (200) provenant de l'appareil (140) qui forme des $NO_x$ et une canalisation (130) d'apport d'oxygène et/ou une canalisation (134) d'apport de gaz porteur qui alimente la chambre de combustion (82), la canalisation d'apport de $NO_x$ présentant une liaison avec la canalisation d'apport d'oxygène et/ou avec la canalisation d'apport de gaz porteur.

**7.** Analyseur (120, 160) selon l'une quelconque des revendications précédentes, comprenant de plus :

- une canalisation (96) de produits de combustion raccordée à la chambre de combustion (82) et qui transfère les produits de combustion vers un détecteur (150) situé en aval et
- un appareil (170) d'apport d'ozone qui présente une liaison avec la canalisation de produits de combustion pour y permettre un apport d'ozone.

**8.** Analyseur (120, 160) selon l'une quelconque des revendications précédentes, dans lequel l'appareil (140) qui forme des $NO_x$ comprend un appareil de chauffage permettant d'augmenter la température de travail de l'appareil qui forme des $NO_x$.

**9.** Analyseur (120, 160) selon la revendication 8, dans lequel l'appareil de chauffage est agencé de manière à transférer en utilisation la chaleur d'une unité destructrice d'ozone à l'appareil (140) qui forme des $NO_x$.

10. Analyseur (120, 160) selon l'une quelconque des revendications précédentes, dans lequel l'appareil (140) qui forme des NO$_x$ est doté d'un ozoniseur (190, 210, 240) agencé pour recevoir un apport d'azote et un apport d'oxygène afin de former des NO$_x$ à partir d'eux.

11. Analyseur (120, 160) selon la revendication 7, dans lequel l'appareil (140) qui forme des NO$_x$ et l'appareil d'apport d'ozone sont tous deux dotées :

  - d'un générateur de décharges électriques qui présente une zone de décharge et qui est agencé de manière à induire une décharge électrique dans la zone de décharge;
  - un premier conduit (224) destiné aux NO$_x$, placé dans une première partie de la zone de décharge et comprenant une admission (198) de gaz source de NO$_x$ qui reçoit un apport de gaz source de NO$_x$ dans le conduit de NO$_x$ et un échappement (200) de NO$_x$ gazeux qui permet d'apporter des NO$_x$ gazeux,
  - un deuxième conduit (226) destiné à l'ozone placé dans une deuxième partie de la zone de décharge et comprenant une admission (228) de gaz source d'ozone pour recevoir un apport de gaz source d'ozone dans le conduit d'ozone et un échappement (230) d'ozone gazeux qui permet d'apporter de l'ozone gazeux.

12. Analyseur (120, 160) selon la revendication 11, dans lequel le premier conduit (224) est placé à côté du deuxième conduit (226) et en est séparé par une séparation (222).

13. Analyseur (120, 160) selon la revendication 11 ou 12, dans lequel le générateur de décharges électriques comprend une unité intégrée de contrôle et d'alimentation en énergie.

14. Analyseur (120, 160) selon l'une quelconque des revendications 11 à 13, dans lequel l'échappement de NO$_x$ gazeux comprend un tube Venturi (246) qui présente un rétrécissement, une ouverture (247) d'admission située à proximité du rétrécissement du tube et un échappement (242) de tube Venturi situé en amont du rétrécissement du tube, le tube Venturi étant agencé afin de recevoir un écoulement de fluide dans le rétrécissement du tube de manière à ce que le NO$_x$ gazeux soit aspiré dans l'ouverture d'admission et soit délivré par l'échappement du tube Venturi.

15. Analyseur (120, 160) selon l'une quelconque des revendications précédentes, dans lequel l'appareil (140) de formation de NO$_x$ comprend :

  - un générateur de décharges électriques qui présente une zone de décharge et qui est agencé pour produire une décharge électrique dans la zone de décharge,
  - un conduit (245) pour NO$_x$ placé dans la zone de décharge et comprenant une admission (198) de gaz source de NO$_x$ qui reçoit un apport de gaz source de NO$_x$ dans le conduit de NO$_x$ et un échappement (200) de NO$_x$ gazeux pour y permettre un apport de NO$_x$ gazeux, l'échappement de NO$_x$ gazeux comprend un tube Venturi (246) qui présente un rétrécissement, une ouverture (247) d'admission située à proximité du rétrécissement du tube et un échappement (242) de tube Venturi situé en amont du rétrécissement du tube, le tube Venturi étant agencé afin de recevoir un écoulement de fluide dans le rétrécissement du tube de manière à ce que le NO$_x$ gazeux soit aspiré dans l'ouverture d'admission et soit délivré par l'échappement du tube Venturi.

16. Appareil (120, 160) selon la revendication 15 ou 14, dans lequel le fluide est de l'oxygène et l'échappement (242) du tube Venturi est configuré pour apporter un mélange d'oxygène et de NO$_x$.

17. Procédé d'analyse par combustion d'un échantillon en effectuant une combustion de l'échantillon dans une chambre de combustion (82) d'un analyseur de combustion (120, 160) et qui analyse les produits gazeux, le procédé comprenant les étapes qui consistent à :

  - amener l'échantillon dans la chambre de combustion,
  - effectuer une combustion de l'échantillon afin de produire des produits de combustion,
  - détecter le SO$_2$ dans les produits de combustion, **caractérisé par** l'étape de formation d'oxyde d'azote (NO$_x$) et
  - amener le NO$_x$ formé à la chambre de combustion.

18. Procédé selon la revendication 17, dans lequel le NO$_x$ est amené à la chambre de combustion (82) avant et/ou pendant la combustion.

19. Procédé selon la revendication 17 ou 18, dans lequel le NO$_x$ est obtenu en faisant passer une décharge électrique dans un mélange d'azote et d'oxygène.

**20.** Procédé selon la revendication 19, dans lequel le mélange est de l'air.

**21.** Procédé selon l'une quelconque des revendications 17 à 20, comprenant de plus l'étape qui consiste à amener de l'ozone aux produits de combustion pour convertir en dioxyde d'azote au moins une partie du monoxyde d'azote présent dans les produits de combustion.

**22.** Procédé selon l'une quelconque des revendications 17 à 21, dans lequel le $NO_x$ est formé par un ozoniseur qui reçoit un apport d' azote et un apport d'oxygène.

**23.** Procédé selon l'une quelconque des revendications 17 à 22, dans lequel le $NO_x$ est formé à une température comprise entre 30 et 50°C.

**24.** Procédé selon la revendication 21, dans lequel le $NO_x$ et l'ozone sont formés en :

- prévoyant une seule unique de décharge électrique,
- faisant passer un mélange d'azote et d'oxygène dans une première partie (224, 245) de la zone, afin de former des $NO_x$ et en
- faisant passer de l'oxygène dans une deuxième partie (226) de la zone pour former de l'ozone.

Fig. 1
Prior art

EP 1 939 619 B1

Fig. 2

EP 1 939 619 B1

Fig. 3

EP 1 939 619 B1

Fig. 4

| 180 | | 181 | | 182 | | 184 | |
|---|---|---|---|---|---|---|---|
| $N_2 + O_2$ mixture | → | Gas conditioning | → | Electric discharge region | → | $NO_x + O_3$ | → |

183 — Power

Fig. 5

190

202

198

204

204

196

196

192

202

192

194

204

196

194

202

Fig. 6

210

216

198

224

190 →

200

222

228

218
226
214

220 →

218

214    212i    212

230

Fig. 7

Fig. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20050074365 A
- US 4879246 A
- GB 269046 A